# EUROPÄISCHE PATENTSCHRIFT

(11) **EP 2 707 840 B1**
(45) Veröffentlichungstag und Bekanntmachung des Hinweises auf die Patenterteilung: **18.03.2015**
(21) Anmeldenummer: 12720797.5
(22) Anmeldetag: 27.04.2012
(51) Int. Cl.: G06K 19/07, H04B 5/00

(54) **VERFAHREN ZUR PERSONALISIERUNG EINES TRAGBAREN DATENTRÄGERS, INSBESONDERE EINER CHIPKARTE**
METHOD FOR PERSONALIZING A PORTABLE DATA STORAGE MEDIUM, IN PARTICULAR A CHIP CARD
PROCÉDÉ DE PERSONNALISATION D'UN SUPPORT DE DONNÉES PORTABLE, EN PARTICULIER D'UNE CARTE À PUCE

(30) Priorität: 10.05.2011 DE 102011100978
(43) Veröffentlichungstag der Anmeldung: 19.03.2014
(73) Patentinhaber: Giesecke & Devrient GmbH, 81677 München (DE)
(72) Erfinder: KLUGE, Stefan, 80997 München (DE)
(86) Internationale Anmeldenummer: PCT/EP2012/001833
(87) Internationale Veröffentlichungsnummer: WO 2012/152389

(56) Entgegenhaltungen:
- WO-A1-2009/000479

## Beschreibung

Die Erfindung betrifft ein Verfahren zur Personalisierung eines tragbaren Datenträgers, insbesondere einer Chipkarte. Darüber hinaus betrifft die Erfindung eine Personalisierungsmaschine und einen tragbaren Datenträger.

Bei der Fertigung von tragbaren Datenträgern werden die einzelnen Datenträger in der Regel am Ende des Herstellungsprozesses personalisiert, d.h. in die Datenträger werden Daten eingebracht bzw. aufgebracht, die einer einzelnen Person bzw. Institution bzw. einer einzelnen Karte zugeordnet sind. Solche Personalisierungsdaten können beispielsweise de Name und die Anschrift des Karteninhabers sowie kartenbezogene Schlüssel umfassen. Dabei ist es aus dem Stand der Technik bekannt, ein Datenträger sowohl optisch als auch elektrisch zu personalisieren. Im Rahmen der optischen Personalisierung werden auf dem Datenträger z.B. über Prägeverfahren oder Lasergravur kartenindividuelle Informationen aufgebracht. Im Rahmen der elektrischen Personalisierung werden in einem entsprechenden Informationsspeicher des tragbaren Datenträgers, wie z.B. einem Magnetstreifen oder einem Flash-Speicher, Informationen hinterlegt. Bei der elektrischen Personalisierung werden die entsprechende Personalisierungsinformation meist über eine kontaktbehaftete Schnittstelle oder auch kontaktlos über eine Empfangsspule des tragbaren Datenträgers an diesen übermittelt.

In der Druckschrift WO 2009/000479 A1 ist ein Verfahren zur kapazitiven Datenübertragung zwischen einem Lesegerät und einem tragbaren Datenträger beschrieben, mit dem u.a. Personalisierungsinformationen an den Datenträger übermittelt werden können. Dabei wird eine hochfrequente Wechselspannung an Koppelflächen des Lesegeräts angelegt, welche über, entsprechende Koppelflächen des tragbaren Datenträgers abgegriffen wird, wodurch Informationen übermittelt werden. In dem tragbaren Datenträger ist dabei ein Parallelschwingkreis vorgesehen, dessen Resonanzfrequenz bei der Betriebsfrequenz der hochfrequenten Wechselspannung liegt. Der Parallelschwingkreis sorgt dafür, dass die im Gleichstromfall galvanisch miteinander verbundenen Datenträger-Koppelflächen bei der Betriebsfrequenz der Wechselspannung getrennt werden und hierdurch die Übertragung eines auswertbaren Signals ermöglichen.

Aus dem Stand der Technik sind ferner tragbare Datenträger mit kapazitiv gekoppelten Leiterflächen bekannt, welche durch einen Benutzer betätigbare Schaltelemente darstellen. Beispiele solcher Schaltelemente sind in den Druckschriften DE 199 14 587 A1 bzw. EP 1094 418 A2 beschrieben.

Im Rahmen der herkömmlichen Personalisierung von tragbaren Datenträgern erweist es sich als nachteilhaft, dass zum Empfang von Personalisierungsdaten eine spezielle Schnittstelle bzw. eine aufwändige Schaltanordnung in dem Datenträger vorgesehen werden muss.

Aufgabe der Erfindung ist es deshalb, eine Personalisierung eines tragbaren Datenträgers auf einfache und effiziente Weise zu ermöglichen.

Diese Aufgabe wird durch das Verfahren gemäß Patentanspruch 1 bzw. die Personalisierungsmaschine gemäß Patentanspruch 13 bzw. den tragbaren Datenträger gemäß Patentanspruch 14 gelöst. Weiterbildungen der Erfindung sind in den abhängigen Ansprüchen definiert.

Das erfindungsgemäße Verfahren dient zur Personalisierung eines tragbaren Datenträgers, der insbesondere als Chipkarte ausgestaltet ist und eine Mikroprozessoreinheit umfasst, welche vorzugsweise als Mikrocontroller in der Form eines entsprechenden IC-Chips ausgestaltet ist. Der tragbare Datenträger beinhaltet dabei ferner ein Koppel-Element mit zwei kapazitiv gekoppelten leitfähigen Flächen. Dieses Koppel-Element ist mit zumindest einem Anschluss der Mikroprozessoreinheit verschaltet.

Das erfindungsgemäße Verfahren zeichnet sich dadurch aus, dass durch eine Personalisierungsmaschine ein elektrostatisches Feld über kapazitiv gekoppelte Elektroden bereitgestellt wird und der tragbare Datenträger zumindest mit seinem Koppel-Element in das elektrostatische Feld eingebracht wird, wobei das elektrostatische Feld das darin eingebrachte Koppel-Element derart beeinflusst, dass ein Pegel an dem zumindest einen Anschluss der Mikroprozessoreinheit verändert wird und hierdurch Personalisierungsdaten von der Personalisierungsmaschine an die Mikroprozessoreinheit des tragbaren Datenträgers übermittelt werden. Das heißt, die über das elektrostatische Feld erzeugten Pegelveränderungen können von der Mikroprozessoreinheit des Datenträgers verarbeitet werden und als entsprechende, von der Personalisierungsmaschine ausgesendete Personalisierungsdaten, wie z.B. kartenindividuelle Schlüssel oder personenbezogene Daten, interpretiert werden.

Das erfindungsgemäße Verfahren macht sich die Erkenntnis zunutze, dass mit einem elektrostatischen Feld eine Spannung über leitfähige Flächen eines Koppel-Elements durch generierte Influenzladungen induziert werden kann. Die induzierte Spannung erzeugt dann einen entsprechenden Signalpegel an einem Anschluss in der Mikroprozessoreinheit, so dass mittels des elektrostatischen Feldes eine Informationsübermittlung ermöglicht wird. Dabei kann auf separate Personalisierungsschnittstellen zur Übertragung von Personalisierungsdaten verzichtet werden. Durch die Verwendung eines elektrostatischen Felds kann ferner eine Informationsübermittlung mit geringem Aufwand realisiert werden, da über eine einfache Verschaltung im Datenträger die induzierte Spannung in einen Signalpegel gewandelt werden kann.

Erfindungsgemäß wird als Koppel-Element im tragbaren Datenträger ein von einem Benutzer betätigbarer Taster mit getrennten leitfähigen Flächen eingesetzt, die bei Betätigung des Tasters elektrisch verbunden werden, wodurch der Pegel an dem zumindest einen Anschluss der Mikroprozessoreinheit beeinflusst wird. Solche Taster sind an sich aus dem Stand der Technik bekannt und werden im Rahmen der soeben beschriebenen Ausführungsform zusätzlich dazu genutzt, um als Koppel-Elemente zum Empfang von Personalisierungsdaten einer Personalisierungsmaschine zu dienen. Dies hat den besonderen Vorteil, dass keine Veränderungen an der Hardware eines tragbaren Datenträgers vorgenommen werden müssen, sondern lediglich die Mikroprozessoreinheit mittels Software derart programmiert werden muss, dass sie entsprechende Signalfolgen richtig als Personalisierungsdaten interpretiert.

In einer weiteren, besonders bevorzugten Ausführungsform ist der tragbare Datenträger, der durch das erfindungsgemäße Verfahren personalisiert wird, eine sog. OTP-Chipkarte (OTP = One Time Passport), welche über ein Display verfügt, auf das bei der Betätigung eines entsprechenden Tasters der Chipkarte ein einmal verwendbares Passwort angezeigt wird. In solchen Karten ist die darin enthaltene Elektronik hermetisch gekapselt, so dass keine direkte elektrische Kontaktiermöglichkeit zur Personalisierung gegeben ist. Um Kosten und Platz in der Karte zu sparen, enthalten solche Karten in der Regel auch keine kontaktlose Schnittstelle (z.B. eine Spule), über die eine kontaktlose Personalisierung erfolgen könnte. Zur Spannungsversorgung enthalten solche OTP-Chipkarten in der Regel eine Batterie. Diese kann mit einem Koppel-Element verschaltet sein, wobei durch das elektrostatische Feld über die Beeinflussung des Koppel-Elements ein durch die Spannungsversorgung an dem zumindest einen Anschluss der Mikroprozessoreinheit bereitgestellter Pegel verändert wird. Das erfindungsgemäße Verfahren ermöglicht auch für solche OTP-Chipkarten eine geeignete elektrische Personalisierung unter Verwendung des darin verbauten Tasters.

In einer weiteren bevorzugten Ausführungsform des erfindungsgemäßen Verfahrens wird durch die Mikroprozessoreinheit des tragbaren Datenträgers im Rahmen der Personalisierung eine am Koppel-Element angelegte Spannung verändert, welche von der Elektroden-Anordnung der Personalisierungsmaschine detektiert wird, wodurch Daten von der Mikroprozessoreinheit des tragbaren Datenträgers an die Personalisierungsmaschine übertragen werden. Die Personalisierungsmaschine verfügt dabei über entsprechende Hardware bzw. Software, um diese Daten zu interpretieren. Mit dieser Variante der Erfindung kann somit eine Datenübertragung nicht nur von der Personalisierungsmaschine zu dem tragbaren Datenträger, sondern auch vom tragbaren Datenträger zur Personalisierungsmaschine erreicht werden. Insbesondere besteht dabei die Möglichkeit, dass die an die Personalisierungsmaschine übertragenen Daten ein Bestätigungssignal zur Bestätigung des (korrekten) Empfangs von zuvor von der Personalisierungsmaschine an die Mikroprozessoreinheit übermittelten Personalisierungsdaten enthalten.

Das im erfindungsgemäßen Verfahren verwendete elektrostatische Feld kann über verschiedene Ausführungen von Elektroden-Anordnungen bereitgestellt werden. In einer Variante der Erfindung wird das elektrostatische Feld über eine Elektroden-Anordnung bereitgestellt, welche zumindest eine erste Elektrode und zumindest eine Masse-Elektrode umfasst, wobei die zumindest eine erste Elektrode in einem Sendebetrieb geschaltet werden kann, in dem zur Übermittlung der Personalisierungsdaten von der Personalisierungsmaschine an die Mikroprozessoreinheit ein entsprechendes (Spannungs-)Potential zur Generierung des elektrostatischen Feldes an die zumindest eine erste Elektrode angelegt wird, und wobei die zumindest eine Masse-Elektrode eine auf einem Bezugspotential liegende Elektrode ist. Dabei wird der in das elektrostatische Feld eingebrachte Datenträger im Rahmen der Personalisierung benachbart zu der zumindest einen ersten Elektrode und der zumindest eine Masse-Elektrode angeordnet.

Eine besonders gute Generierung von Influenzladungen in den leitfähigen Flächen des Koppel-Elements wird dann erreicht, wenn der in das elektrostatische Feld eingebrachte Datenträger zwischen der zumindest einen ersten Elektrode und der zumindest einen Masse-Elektrode angeordnet ist. Gegebenenfalls ist es jedoch auch möglich, dass nur eine Seite des in das elektrostatische Feld eingebrachten Datenträgers auf die zumindest eine erste Elektrode und die zumindest eine Masse-Elektrode zuweist. Der tragbare Datenträger ist dabei insbesondere als Chipkarte mit einem Kartenkörper ausgestaltet, der zwischen die erste Elektrode und die Masse-Elektrode positioniert wird bzw. dessen eine Seite benachbart zu der ersten Elektrode und der Masse-Elektrode angeordnet wird.

Wie bereits oben erwähnt, können ggf. auch Daten von dem tragbaren Datenträger an die Personalisierungsmaschine übermittelt werden. Hierzu kann die oben beschriebene zumindest eine erste Elektrode genutzt werden, welche in einen Empfangsbetrieb geschaltet wird, in dem über diese Elektrode eine Veränderung einer am Koppel-Element (d.h. an dessen leitfähigen Flächen) angelegten Spannung detektiert wird, wodurch Daten von der Mikroprozessoreinheit des tragbaren Datenträgers an die Personalisierungsmaschine übermittelt werden.

In einer weiteren Ausführungsform der Erfindung kann zusätzlich bzw. alternativ auch zumindest eine zweite Elektrode zur Datenübermittlung von der Mikroprozessoreinheit des tragbaren Datenträgers zur Personalisierungsmaschine genutzt werden. Diese zweite Elektrode kann wiederum in einen Empfangsbetrieb geschaltet werden, in dem über diese Elektrode eine Veränderung einer am Koppel-Element angelegten Spannung detektiert wird, wodurch Daten von der Mikroprozessoreinheit des tragbaren Datenträgers an die Personalisierungsmaschine übermittelt werden.

In einer weiteren, besonders bevorzugten Ausführungsform der Erfindung umfassen die zumindest eine erste Elektrode und die zumindest eine zweite Elektrode ein Paar von koaxial angeordneten Elektroden mit einer inneren und einer äußeren Elektrode. Vorzugsweise ist dabei die äußere Elektrode eine erste Elektrode, mit der über ein durch diese Elektrode erzeugtes elektrostatisches Feld Personalisierungsdaten übermittelt werden, wohingegen die innere Elektrode vorzugsweise eine Empfangselektrode ist, über welche die von dem tragbaren Datenträger bereitgestellten elektrischen Signale, welche mit niedrigerer Spannung über die leitfähigen Flächen des Koppel-Elements ausgesendet werden, empfangen werden.

In einer weiteren Ausgestaltung des erfindungsgemäßen Verfahrens werden zwei Paare von koaxial angeordneten Elektroden verwendet, welche gegenüberliegend zueinander angeordnet sind, wobei beim Betrieb der ersten und/oder zweiten Elektrode des einen Paars im Sende- und/oder Empfangsbetrieb die erste und/ oder zweite Elektrode des anderen Paars auf Bezugspotential gesetzt werden und hierdurch die zumindest eine Masse-Elektrode darstellen. Auf diese Weise wird eine flexible Personalisierung für verschiedene Arten von tragbaren Datenträgern ermöglicht. Dabei wird der Tatsache Rechnung getragen, dass für bestimmte Datenträger die Anordnung der ersten Elektrode auf der Rückseite des tragbaren Datenträgers zur Übertragung von Personalisierungsdaten zu bevorzugen ist, wohingegen bei anderen tragbaren Datenträgern die Anordnung der ersten Elektrode auf der Vorderseite des tragbaren Datenträgers erfolgen sollte. In tragbaren Datenträger, bei denen ein Taster als Koppel-Element verwendet wird, hängt die bevorzugte Anordnung der ersten Elektrode davon ab, wie der Taster in der Karte verbaut ist.

In einer weiteren bevorzugten Ausführungsform des erfindungsgemäßen Verfahrens umfasst die zumindest eine Masse-Elektrode eine oder mehrere leitfähige Massenflächen. Insbesondere kann eine Massenfläche vorgesehen sein, welche eine Seite des tragbaren Datenträgers bzw. eine Seite des Kartenkörpers einer Chipkarte im Wesentlichen vollflächig abdeckt. Um Störstrahlung von außen abzuschirmen, umfasst die Massen-Elektrode vorzugsweise mehrere leitfähige Massenflächen, welche auf beiden Seiten des in das elektrostatische Feld eingebrachten tragbaren Datenträgers angeordnet sind.

Neben dem oben beschriebenen Verfahrens betrifft die Erfindung ferner eine Personalisierungsmaschine zur Personalisierung eines tragbaren Datenträgers, wobei mit der Personalisierungsmaschine das erfindungsgemäße Verfahren bzw. eine oder mehrere Varianten des erfindungsgemäßen Verfahrens durchführbar sind. Somit kann die Personalisierungsmaschine auch die im Rahmen von bevorzugten Varianten des Verfahrens beschriebenen Merkmale enthalten, sofern diese Merkmale die Personalisierungsmaschine betreffen.

Die Personalisierungsmaschine dient dabei zur Personalisierung eines tragbaren Datenträgers, der eine Mikroprozessoreinheit und ein Koppel-Element mit zwei kapazitiv gekoppelten leitfähigen Flächen umfasst, wobei das Koppel-Element mit zumindest einem Anschluss der Mikroprozessoreinheit verschaltet ist. Die Personalisierungsmaschine umfasst eine Elektroden-Anordnung mit kapazitiv gekoppelten Elektroden zum Bereitstellen eines elektrostatischen Feldes, in welches der tragbare Datenträger zumindest mit einem Koppel-Element zur Personalisierung eingebracht werden kann, wobei das elektrostatische Feld das Koppel-Element derart beeinflusst, dass ein Pegel an dem zumindest einen Anschluss verändert wird und hierdurch Personalisierungsdaten von der Personalisierungsmaschine an die Mikroprozessoreinheit des tragbaren Datenträgers übermittelt werden.

Die Erfindung betrifft darüber hinaus einen tragbaren Datenträger, insbesondere eine Chipkarte, welche mit dem erfindungsgemäßen Verfahren bzw. einer oder mehreren Varianten des erfindungsgemäßen Verfahrens personalisierbar ist. Somit kann der Datenträger auch die im Rahmen von bevorzugten Varianten des Verfahrens beschriebenen Merkmale enthalten, sofern diese Merkmale den Datenträger betreffen. Der Datenträger umfasst eine Mikroprozessoreinheit und ein Koppel-Element mit zwei kapazitiv gekoppelten leitfähigen Flächen, wobei das Koppel-Element mit zumindest einem Anschluss der Mikroprozessoreinheit verschaltet ist. Die Mikroprozessoreinheit des tragbaren Datenträgers ist dabei derart ausgestaltet, dass sie aus einer Veränderung eines Pegels an dem zumindest einen Anschluss, welche durch ein elektrostatisches Feld hervorgerufen wird, das durch eine Personalisierungsmaschine über eine Elektroden-Anordnung mit kapazitiv gekoppelten Elektroden bereitgestellt wird und in welches das Koppel-Element des tragbaren Datenträgers eingebracht ist, von der Personalisierungsmaschine an die Mikroprozessoreinheit übermittelte Personalisierungsdaten ermitteln und speichern kann.

Ausführungsbeispiele der Erfindung werden nachfolgend anhand der beigefügten Figuren detailliert beschrieben.

Es zeigen:
- Fig.1 bis Fig. 4: schematische Darstellungen von Ausführungsformen eines tragbaren Datenträgers, der basierend auf dem erfindungsgemäßen Personalisierungsverfahren personalisierbar ist;
- Fig. 5: eine Draufsicht auf einen Taster, der in einer mit dem erfindungsgemäßen Verfahren zur personalisierenden Chipkarte integriert ist;
- Fig. 6: eine Seitenansicht einer Chipkarte, welche den Taster der Fig. 5 umfasst;
- Fig. 7: eine schematische Darstellung, welche die Wechselwirkung des im erfindungsgemäßen Verfahren verwendeten elektrostatischen Feldes mit einem Taster verdeutlicht;
- Fig. 8 bis Fig. 12: schematische Darstellungen von verschiedenen Varianten des erfindungsgemäßen Verfahrens zur Personalisierung einer Chipkarte.

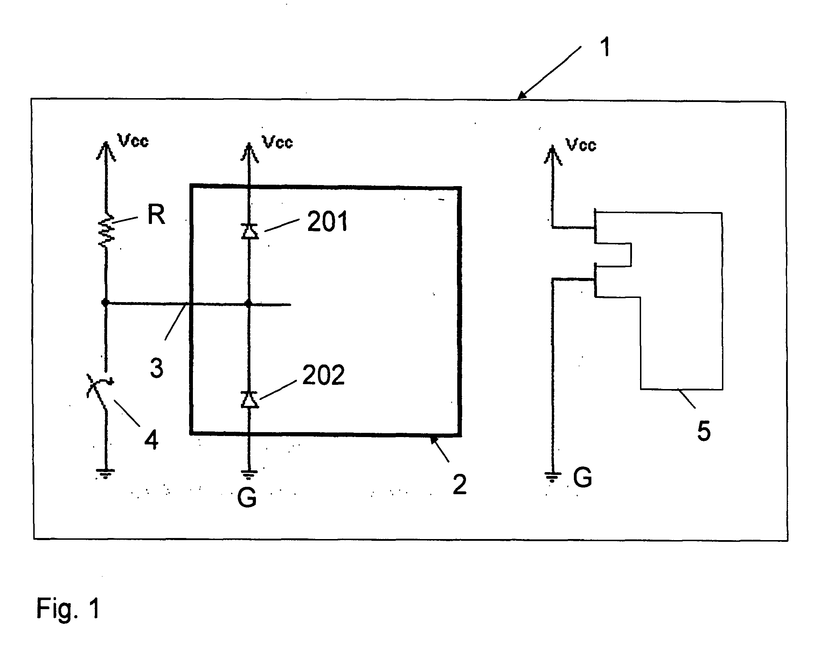

Fig.1 zeigt die schematische Darstellung eines tragbaren Datenträgers mit einem Mikroprozessor. Der mit dem Bezugszeichen 1 wiedergegebene tragbare Datenträger ist kleinformatig, so daß er von einem Nutzer jederzeit mitgeführt werden kann, und aufgrund der geringen Baugröße ressourcenbeschränkt. Die Leistungsfähigkeit des Mikroprozessors und die Speicherkapazität sind deshalb deutlich geringer als z.B. bei gängigen PCs. Der tragbare Datenträger besitzt zudem höchstens eine reduzierte Nutzerschnittstelle mit einem in der Regel auf eine Wiedergabe weniger Zeichen ausgelegten Display sowie einem minimalen Satz Eingabeelementen. In einer beispielhaften Ausführung, die für die nachfolgende Beschreibung zugrundgelegt wird, besitzt der tragbare Datenträger die Form einer Chipkarte bzw. einer sog. Smartcard und hat die Abmessungen einer Kreditkarte.

Die Chipkarte 1 umfasst einen Mikroprozessorcontroller in der Form eines IC-Chips 2, der über einen I/O-Port 3 mit einem schematisch angedeuteten Taster 4 und einem Pullup-Widerstand R verschaltet ist. Die Chipkarte 1 verfügt dabei über eine integrierte Spannungsversorgung in der Form einer Batterie 5, über welche die Versorgungsspannung VCC für den Mikrocontroller 2 bereitgestellt wird und an welche auch der Taster 4 und der PullupWiderstand R angeschlossen sind. Die Verbindung mit der Versorgungsspannung VCC ist schematisch in Fig.1 durch einen Pfeil hin zu VCC angedeutet, wobei das entsprechende Massepotential mit G bezeichnet wird.

Bei der in Fig.1 dargestellten Chipkarte handelt es sich vorzugsweise um eine sog. OTP-Chipkarte. Diese umfasst ein Display, auf dem ausgelöst durch die Betätigung eines Benutzers ein durch den Mikrocontroller generiertes Einmal-Passwort wiedergegeben wird. Der Benutzer drückt hierzu auf eine entsprechend vorgesehene Fläche des Kartenkörpers der Chipkarte, wodurch der Taster 4 geschlossen wird, woraufhin der Pegel am I/O-Port 3, der über den Pullup-Widerstand R bei geöffnetem Taster 4 auf das Potential VCC gezogen wird, geändert wird. Die Änderung des Pegels, der zwischen zwei Dioden 201 und 202 anliegt, löst die Generierung des Passworts im Mikrocontroller aus.

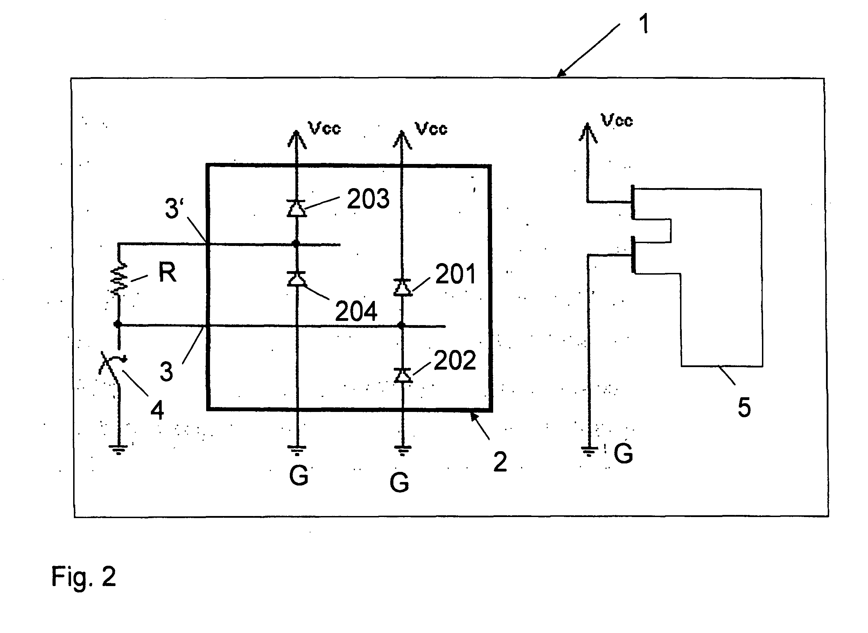

Grundsätzlich kann alternativ zu einem Pullup-Widerstand natürlich stets auch ein Pulldown-Widerstand vorgesehen sein, der den I/O-Port 3 mit dem Massepotential G verbindet; die in Fig. 1, und ebenso in den Fig. 2 bis 4, gezeigte Verschaltung ist dann entsprechend zu ändern.

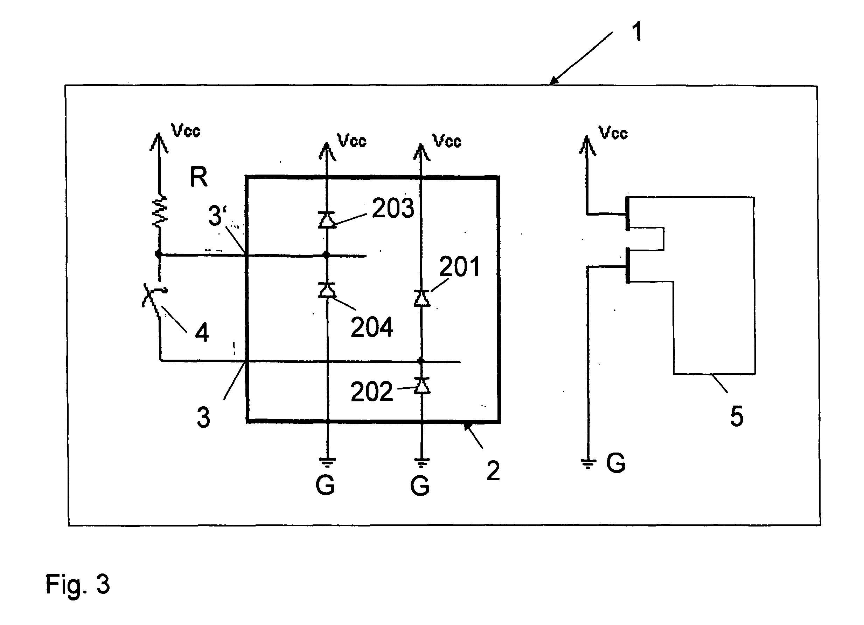

Fig. 2 und Fig. 3 zeigen abgewandelte Ausführungsformen der Chipkarte der Fig. 1, wobei in diesen Figuren gleiche Bauteile mit den gleichen Bezugszeichen wie in Fig.1 versehen sind und nicht nochmals detailliert beschrieben werden. In Fig. 2 wird die am Pullup-Widerstand R anliegende Versorgungsspannung VCC auch über einen weiteren, dann als Output benutzten I/O-Port 3' unter Verwendung von Dioden 203 und 204 bereitgestellt. Hierdurch kann der Taster 4 temporär außer Betrieb gesetzt werden. Fig. 3 zeigt eine mit Fig. 2 vergleichbare Schaltung, welche wiederum über zwei I/O-Port 3 und 3' verfügt. Im Unterschied zur Fig. 2 ist der Taster 4 nunmehr zwischen den beiden Ports 3 und 3' angeordnet.

Im Rahmen des Betriebs der Chipkarte gemäß Fig. 1 bis Fig. 3 ist der Mikrocontroller 2 im Normalmodus im Tiefschlaf und wird nur durch den Druck auf den Taster 4 mittels des damit ausgelösten Interrupts geweckt. Typischerweise fragt das im Mikrocontroller laufende Programm daraufhin noch eine Zeit lang den Taster 4 ab, um den anliegenden Signalpegel zu ermitteln und damit eine mögliche kurzfristige Störung von einem beabsichtigten Tastendruck zu unterscheiden. Wie weiter unten noch näher beschrieben ist, wird die Chipkarte 1 gemäß Fig. 1 bis Fig. 3 über eine Personalisierungsmaschine mit Hilfe eines elektrostatischen Feldes personalisiert, wobei dieses elektrostatische Feld auf den Taster 4 wirkt und über Influenz an den entsprechenden leitfähigen Flächen des Tasters den Pegel des I/O-Ports 3 beeinflusst. Über das elektrostatische Feld, welches beispielsweise in einem vorbestimmten Muster an- und abgeschaltet werden kann, wird eine Signalfolge an den Mikrocontroller 2 über die Veränderung des Pegels am I/O-Port 3 gegeben. Der Mikrocontroller 2 ist dabei derart ausgestaltet, dass er diese Signalfolge mit entsprechender Software interpretieren kann und daraus Personalisierungsdaten ableiten kann, welche dann dauerhaft in der Chipkarte hinterlegt werden.

Im Rahmen der Personalisierung wird über den Mechanismus der Influenz basierend auf einem elektrostatischen Feld eine Signalfolge an den Mikrocontroller 2 gegeben. Eine Signalübermittlung ist dabei insbesondere auch dann möglich, wenn, wie in einer OTP-Karte, sämtliche Kontaktflächen des I/O-Ports in dem Kartenkörper elektrisch isoliert verbaut sind. Da der in der Karte vorgesehene Taster in der Regel ausreichend große elektrisch leitfähige Flächen besitzt, die insbesondere auch die Zuleitung zum Taster umfassen, kann ein von außerhalb der Karte angelegtes elektrisches Feld in eine ausreichend hohe influenzierte Spannung und damit eine entsprechende Signalfolge gewandelt werden. Das Verfahren funktioniert dabei um so besser, je höher die über das elektrostatische Feld bereitgestellte Spannung ist bzw. je stärker ihre Anstiegsflanke ist bzw. je größer die leitfähigen Flächen des Tasters sind bzw. je höher der Widerstandswert des Pullup-Widerstands ist.

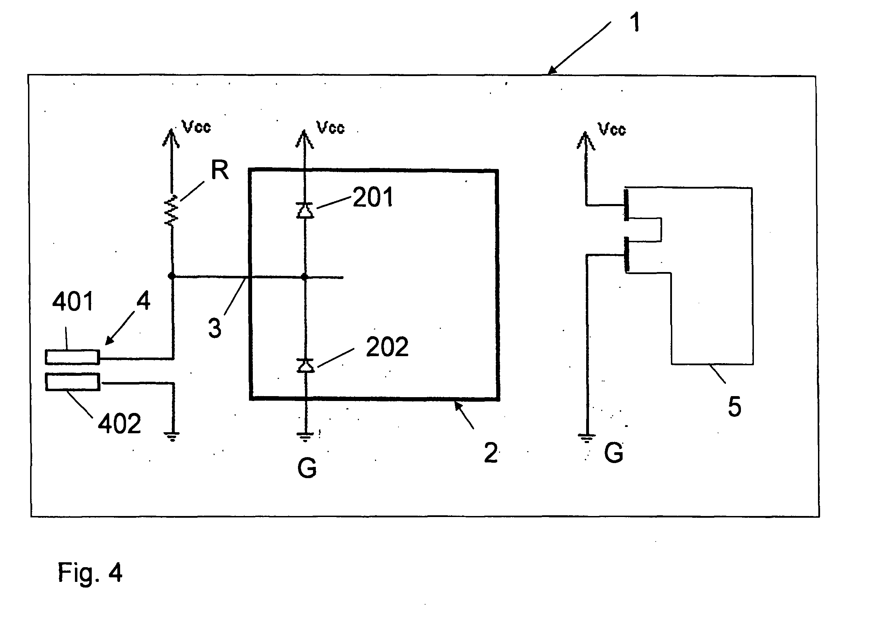

Fig. 4 zeigt eine Abwandlung der in Fig. 1 gezeigten Chipkarte. Im Unterschied zu der Chipkarte der Fig.1 werden nunmehr anstatt eines Tasters zwei separate kapazitiv gekoppelte Leiterflächen 401 und 402 verwendet, welche analog zu den vorangegangenen Ausführungsformen über ein elektrostatisches Feld beeinflusst werden und eine Signalfolge an I/O-Port 3 generieren, welche durch entsprechende Software im Mikrocontroller 2 als Personalisierungsdaten interpretiert werden. In der Ausführungsform der Fig. 4 sind somit separate, elektrisch leitfähige Koppel-Flächen vorgesehen, die in das elektrostatische Feld im Rahmen der Personalisierung eingebracht werden und an separaten I/O-Ports hängen. Im Unterschied hierzu werden in den Ausführungsformen der Fig. 1 bis Fig. 3 die kapazitiv gekoppelten Leiterflächen eines bereits vorhandenen Tasters benutzt, um hierüber ein elektrostatisches Feld und eine damit verbundene Signalfolge zu detektieren.

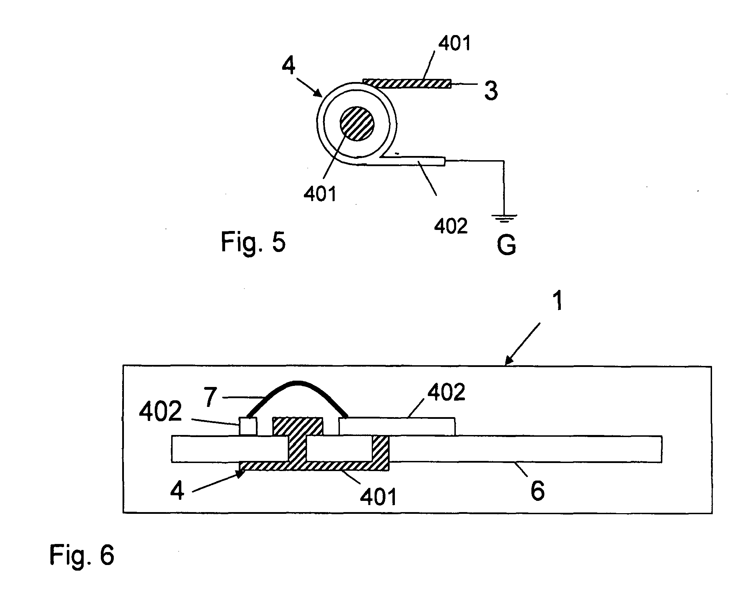

Fig. 5 zeigt in schematischer Aufsicht einen Taster 4, der in den nachfolgend beschriebenen Ausführungsformen der Erfindung zum Einsatz kommt. Der Taster 4 enthält eine erste leitfähige Fläche 401, welche schraffiert angedeutet ist und eine gerade Zuleitung hin zum I/O-Port 3 umfasst. Die Fläche 401 enthält ferner einen als schraffierter Kreis wiedergegebenen Kontaktpunkt, der mit der Zuleitung verbunden ist, wie aus der weiter unten beschriebenen Seitenansicht der Fig. 6 ersichtlich wird. Elektrisch isoliert zu der leitfähigen Fläche 401 ist eine weitere leitfähige Fläche 402 vorgesehen, welche einen geraden Leiterabschnitt hin zur Masse G sowie einen ringförmigen Leiterabschnitt aufweist, der mit dem geraden Leiterabschnitt verbunden ist. Über dem ringförmigen Leiterabschnitt und dem Kompaktpunkt befindet sich ein kuppelförmiges elektrisch leitfähiges Kontaktelement 7, das nicht aus Fig. 5 ersichtlich ist. Durch Druck auf dieses Kontaktelement wird der Taster 4 betätigt und die beiden ursprünglich kapazitiv gekoppelten Leiterflächen 401 und 402 galvanisch verbunden, wie sich aus Fig. 6 ergibt.

Fig. 6 zeigt in schematischer Darstellung eine Chipkarte 1, die einen Taster nach Fig. 5. enthält, der jetzt in geschnittener Seitenansicht dargestellt ist. Auf einer dielektrischen Fläche 6, die Bestandteil des Kartenkörpers der Chipkarte 1 ist, ist eine elektrisch leitfähige Fläche 401 vorgesehen, welche auf der Unterseite des dielektrischen Körpers 6 aufgebracht ist und sich durch eine Öffnung im dielektrischen Körper 6 auf die Oberseite erstreckt, wo sie den Kontaktpunkt bildet. Ferner weist die leitfähige Fläche 401 am rechten Ende einen sich durch eine weitere Öffnung des dielektrischen Körpers 6 erstreckenden Anschlusses auf, über den die Verbindung mit dem I/O-Port 3 der Chipkarte 1 erfolgt. Der Anschluss ist dabei versetzt zu der leitfähigen Fläche 402 angeordnet, welche auf der Oberseite des dielektrischen Körpers 6 ausgebildet ist und welche mit dem bereits oben erwähnten kuppelförmigen Kontaktelement 7 verbunden ist, das auf dem ringförmigen Abschnitt der leitfähigen Fläche 402 angeordnet ist. Das Kontaktelement 7 ist dabei elastisch ausgestaltet und durch Druck auf das Element wird eine elektrische Kontaktierung zwischen den beiden leitfähigen Flächen 401 und 402 erreicht, was wiederum an einem entsprechenden I/O-Port von dem Mikrocontroller der Chipkarte 1 erfasst werden kann. Die soeben beschriebene Ausführungsform des Tasters 4 wird in allen weiter unten beschriebenen Varianten des erfindungsgemäßen Personalisierungsverfahrens verwendet.

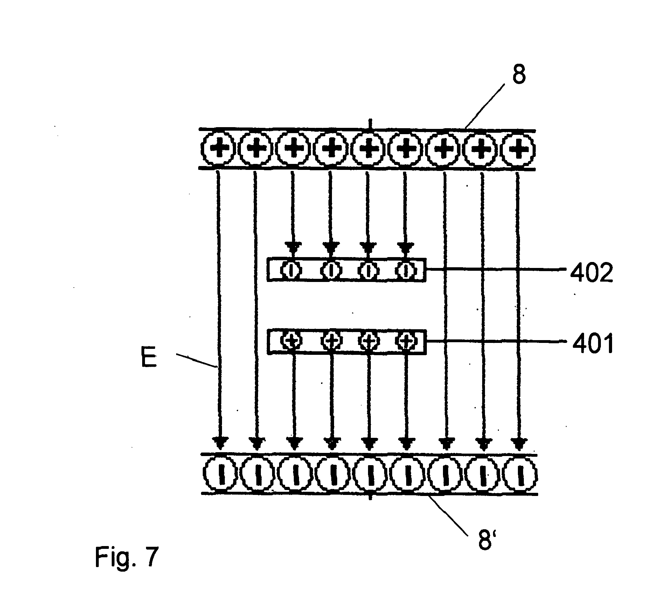

Fig. 7 veranschanlicht das der erfindungsgemäßen Personalisierung zugrundeliegende Prinzip der Influenz. Dabei wird ein elektrostatisches Feld E, das durch nach unten gerichtete Pfeile angedeutet ist, zwischen zwei entgegengesetzt geladenen Elektroden angelegt, welche in Fig. 7 lediglich schematisch wiedergegeben und mit Bezugszeichen 8 und 8' bezeichnet sind. Die Elektrode 8 ist dabei die positiv geladene Elektrode und die Elektrode 8' die negativ geladene Masse-Elektrode. Das elektrostatische Feld E bewirkt an leitfähigen Flächen 401 und 402, welche den leitfähigen Flächen eines Tasters bzw. separaten leitfähigen Koppelflächen entsprechen, die Erzeugung von Influenzladungen, so dass die Leitfläche 401 positiv und die Leitfläche 402 negativ geladen ist. Die hierdurch induzierte Spannung wird als entsprechender Pegel an einem I/O-Port des Mikrocontrollers der Chipkarte erfasst. Hierdurch ist es möglich, geeignete Personalisierungsdaten in die Chipkarte hinein zu senden.

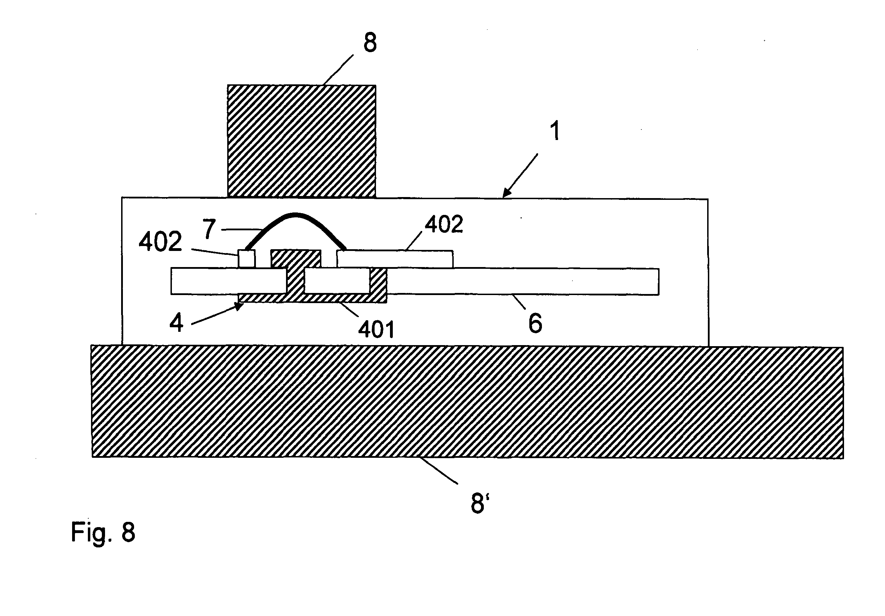

Fig. 8 zeigt eine Ausführungsform einer Elektroden-Anordnung, die Teil einer Personalisierungsmaschine ist und mit der Personalisierungsdaten in eine Chipkarte 1 nach Fig. 6 gesendet werden können. Die Elektroden-Anordnung umfasst eineim Folgenden auch als "aktive" Elektrode bezeichnete obere Elektrode 8, an der die entsprechende Spannung bereitgestellt wird, mit der das elektrostatische Feld erzeugt wird. Gegenüberliegend zu der aktiven Elektrode 8 ist die Masse-Elektrode 8' angeordnet, die eine wesentlich größere Massefläche aufweist. Zwischen Elektrode 8 und 8' bildet sich das in Fig. 7 schematisch angedeutete elektrostatische Feld E aus. Zur Personalisierung der Chipkarte 1 wird diese zwischen den Elektroden 8 und 8' plaziert, und zwar derart, dass der Taster 4 unterhalb der Elektrode 8 liegt. Das elektrostatische Feld der Elektroden-Anordnung wird dann derart durch eine Sendeeinheit der Personalisierungsmaschine gesteuert, dass mittels Influenz eine den zu übertragenden Personalisierungsdaten entsprechende Signalfolge in der Chipkarte generiert wird, die dann von dem Mikrocontroller interpretiert werden kann.

In der Ausführungsform der Fig. 8 kann die aktive Elektrode 8 nicht nur als Sendeelektrode zum Übermitteln von Personalisierungsdaten an eine Chipkarte 1, sondern auch als Empfangselektrode genutzt werden. Im letzterem Fall wird die Elektrode 8 anstatt mit der Sendeeinheit der Personalisierungsmaschine mit einer Empfangseinheit verbunden. In diesem Empfangsbetrieb werden von dem Mikrocontroller der Chipkarte 1 entsprechende elektrische Signale an den Taster 4 gegeben, die dann über die Elektrode 8 der Personalisierungsmaschine detektiert werden und anschließend nach geeigneter Verstärkung und Dekodierung als Antwort der Chipkarte 1 in der Personalisierungsmaschine zur Verfügung stehen. Die an den Taster 4 gegebenen elektrischen Signale werden von der Elektroden-Anordnung wiederum basierend auf Influenz erfasst.

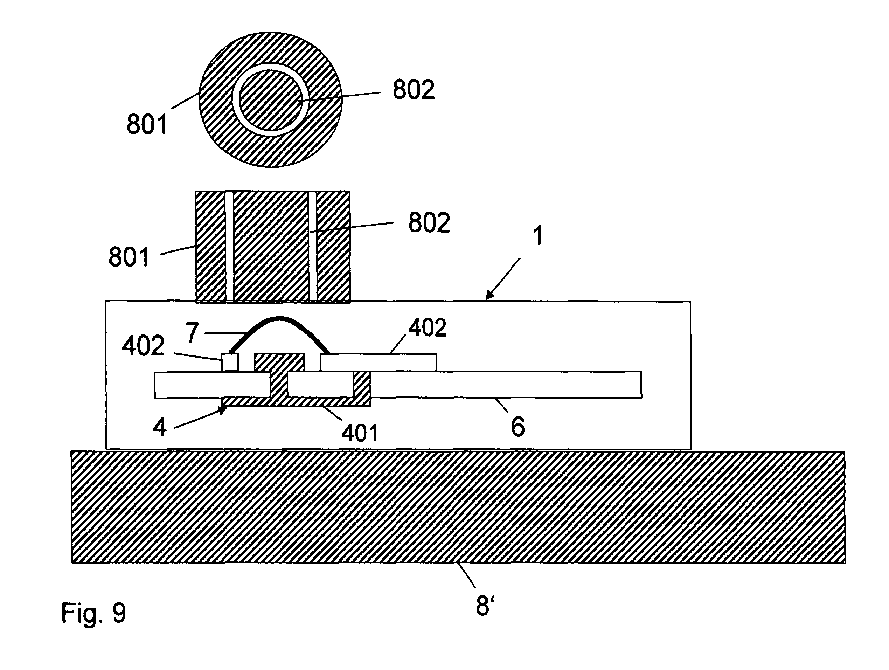

Fig. 9 zeigt eine Abwandlung der Ausführungsform nach Fig. 8. Die Elektroden-Anordnung der Fig. 9 unterscheidet sich von der Elektroden-Anordnung der Fig. 8 dabei darin, dass anstatt einer einzelnen aktiven Elektrode 8 eine koaxiale Anordnung von zwei Elektroden 801 und 802 verwendet wird, wobei die Elektrode 801 eine äußere Ringelektrode und die Elektrode 802 eine innere zylindrische Elektrode bildet, die von der Ringelektrode elektrisch isoliert ist. Zur Verdeutlichung ist im oberen Teil der Fig. 9 nochmals in Aufsicht die koaxiale Anordnung der Elektroden 801 und 802 gezeigt. Im Unterschied zur Ausführungsform der Fig. 8 fungiert nunmehr die äußere Elektrode 801 nur als reine Sendeelektrode, welche im Sendebetrieb der Personalisierungsmaschine mit hoher Spannung Personalisierungsdaten in die Karte hinein sendet. Demgegenüber ist die innere Elektrode 802 eine reine Empfangselektrode, mit der in einem entsprechenden Empfangsbetrieb von der Chipkarte 1 mit niedriger Spannung gesendete Signale empfangen werden.

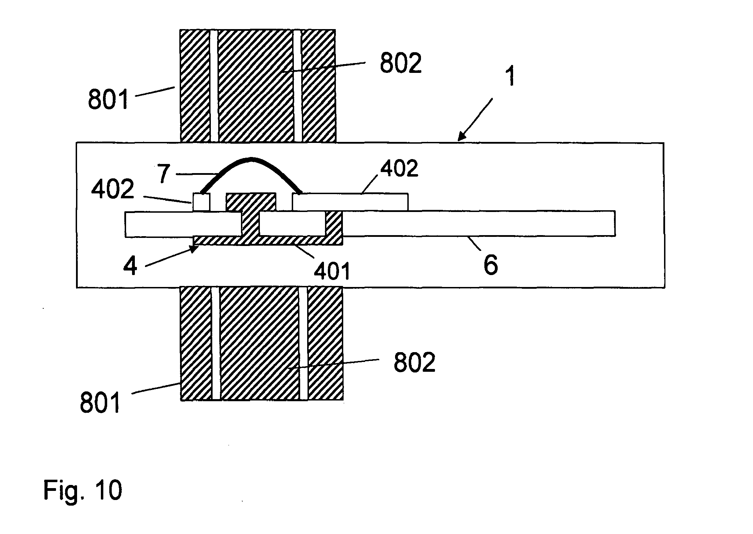

Fig. 10 zeigt eine Abwandlung der Ausführungsform der Fig. 9. Anstatt einer vollflächigen Masse-Elektrode 8', welche die Unterseite der Chipkarte 1 abdeckt, wird nunmehr ein weiteres koaxiales Elektrodenpaar aus Sendeelektrode 801 und Empfangselektrode 802 verwendet. Hierdurch wird der Tatsache Rechnung getragen, dass je nach Ausgestaltung und elektronischer Verschaltung des in der Chipkarte 1 verbauten Tasters 4 die Sende- bzw. Empfangselektrode entweder auf der Vorderseite oder auf der Rückseite der Karte anzubringen ist. Sollte das Senden und Empfangen von der Vorderseite der Chipkarte 1 erfolgen, werden die oberen Elektroden 801 und 802 im Sende- bzw. Empfangsbetrieb betrieben, wohingegen die unteren Sende- bzw. Empfangselektroden 801 und 802 auf Masse gelegt werden und somit die Masse-Elektrode darstellen. Sollte demgegenüber für eine andere Variante einer Chipkarte 1 das Senden bzw. Empfangen von Daten von der Rückseite der Chipkarte 1 vorteilhaft sein, werden die unteren Elektroden 801 und 802 im Sende- bzw. Empfangsbetrieb betrieben, wohingegen die oberen Elektroden 801 und 802 als Masse-Elektroden fungieren. Die Ausführungsform nach Fig. 10 weist den Vorteil auf, dass im Rahmen der Fertigung verschiedene Produktvarianten einer Chipkarte personalisiert werden können, ohne den mechanischen Aufbau der Personalisierungsmaschine zu verändern bzw. die Zuführung der Chipkarte 1 in die Elektroden-Anordnung zu ändern.

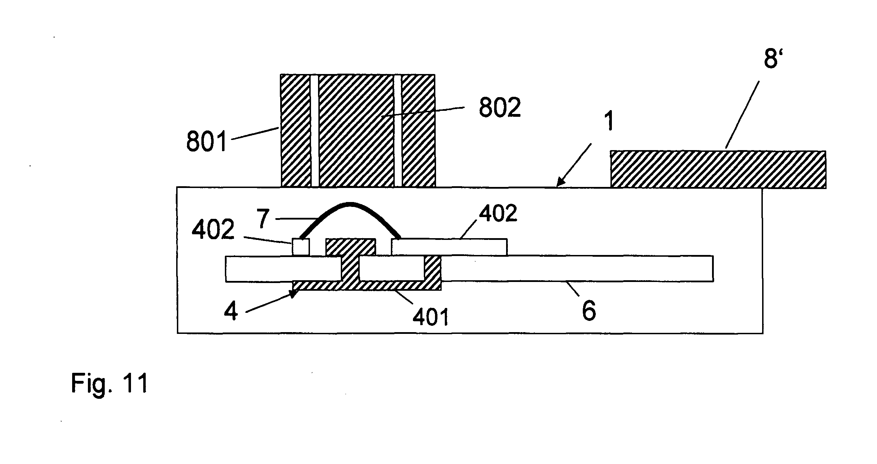

Die in Fig. 8 gezeigte Anordnung der Masse-Elektrode 8' gegenüberliegend zur aktiven Elektrode 8 stellt den Idealfall für den beschriebenen Influenzvorgang zur Übermittlung von Personalisierungsdaten an eine Chipkarte dar. Es ist für bestimmte Varianten der Chipkarte aber auch möglich, die Masse-Elektrode auf der gleichen Seite der Chipkarte wie die aktive Elektrode anzuordnen. Eine solche Anordnung ist in Fig. 11 gezeigt. Dort ist die Masse-Elektrode 8' gemeinsam mit den koaxial angeordneten aktiven Elektroden 801 und 802 auf der Vorderseite der Chipkarte angeordnet. Die Masse-Elektrode befindet sich dabei in rechten Bereich der Chopkarte. Da ein großer Teil der elektronischen Schaltung in der Chipkarte 1 als Gegenelektrode wirkt, ist eine Signalübertragung basierend auf Influenz in der Regel auch in der in Fig. 11 gezeigten Anordnung möglich.

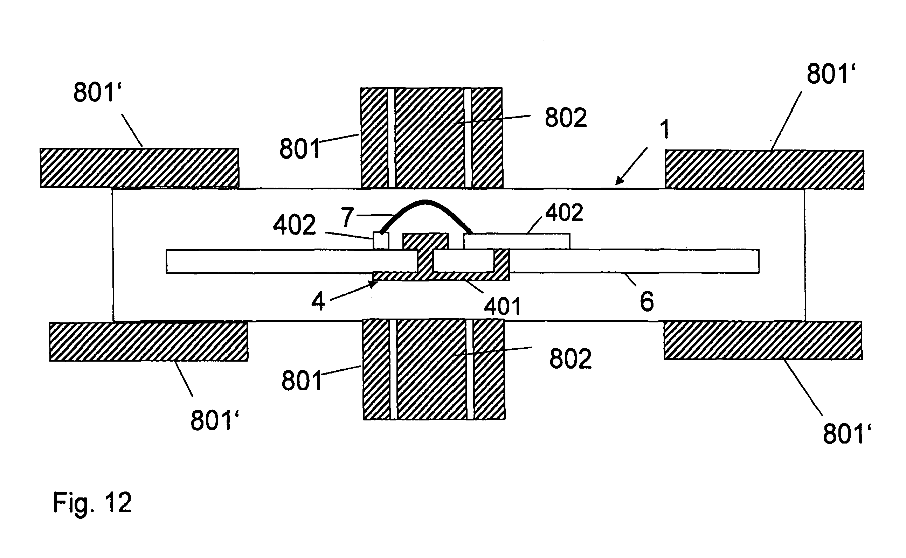

Fig. 12 zeigt eine Abwandlung der Ausführungsform der Fig. 10. Dabei sind zusätzliche, als Masse-Elektroden wirkende Masseflächen 801' benachbart zu der Oberseite bzw. Unterseite der Chipkarte im linken und rechten Bereich vorgesehen. Die Ausführungsform der Fig. 12 hat den Vorteil, dass Störstrahlung von außen abgeschirmt wird und ferner eine ausreichend große Massen-Elektrode an passender Stelle für den Influenzvorgang bereitgestellt wird.

Die Vorangegangenen beschriebenen Ausführungsformen der Erfindung weisen den Vorteil auf, dass auf einfache Weise mittels eines elektrostatischen Feldes einer Elektroden-Anordnung eine Signalfolge in eine Chipkarte gesendet werden kann, die dann von dem Mikrocontroller der Chipkarte als Personalisierungsdaten erfasst werden kann. Dabei besteht ggf. auch die Möglichkeit, dass in umgekehrter Richtung von der Chipkarte an die Elektroden-Anordnung Signale übermittelt werden, mit denen beispielsweise ein korrekter Empfang von Personalisierungsdaten bestätigt wird. In besonders bevorzugten Ausführungsformen der Erfindung kann ein in der Chipkarte bereits vorgesehener Taster dazu verwendet werden, um mittels von Influenz die Personalisierungsdaten zu empfangen bzw. auch in umgekehrter Richtung Daten an die Personalisierungsmaschine zu übermitteln.

## Patentansprüche

1. Verfahren zur Personalisierung eines tragbaren Datenträgers (1), insbesondere einer Chipkarte, mit einer Mikroprozessoreinheit (2) und einem Koppel-Element (4) umfassend zwei kapazitiv gekoppelte leitfähige Flächen (401, 402), wobei das Koppel-Element (4) mit zumindest einem Anschluss (3, 3') der Mikroprozessoreinheit (2) verschaltet ist,
**dadurch gekennzeichnet, dass**
durch eine Personalisierungsmaschine ein elektrostatisches Feld (E) über eine Elektroden-Anordnung mit kapazitiv gekoppelte Elektroden (8, 8', 801, 802) bereitgestellt wird und der tragbare Datenträger (1) zumindest mit seinem Koppel-Element (4) in das elektrostatische Feld (E) eingebracht wird, wobei das elektrostatische Feld (E) das Koppel-Element (4) derart beeinflusst, dass ein Pegel an dem zumindest einen Anschluss (3, 3') verändert wird und hierdurch Personalisierungsdaten von der Personalisierungsmaschine an die Mikroprozessoreinheit (2) des tragbaren Datenträgers (1) übermittelt werden, und dass das Koppel-Element (4) ein von einem Benutzer betätigbarer Taster ist, wobei bei Betätigung des Tasters die leitfähigen Flächen (401, 402) elektrisch kontaktiert werden und hierdurch der Pegel an dem zumindest einen Anschluss (3, 3') beeinflusst wird.

2. Verfahren nach Anspruch 1, **dadurch gekennzeichnet, dass** ein tragbarer Datenträger (1) in der Form einer OTP-Chipkarte personalisiert wird, wobei die OTP-Chipkarte derart ausgestaltet ist, dass durch Betätigung des Tasters (4) die Ausgabe eines Passworts auf einem Display der OTP-Chipkarte ausgelöst wird.

3. Verfahren nach einem der vorhergehenden Ansprüche, **dadurch gekennzeichnet, dass** in dem tragbaren Datenträger (1) eine mit dem Koppel-Element (4) verschaltete Spannungsversorgung (5) vorgesehen ist, wobei durch das elektrostatische Feld (E) über die Beeinflussung des Koppel-Elements (4) ein durch die Spannungsversorgung (5) an dem zumindest einen Anschluss (3, 3') bereitgestellter Pegel verändert wird.

4. Verfahren nach einem der vorhergehenden Ansprüche, **dadurch gekennzeichnet, dass** durch die Mikroprozessoreinheit (2) des tragbaren Datenträgers (1) im Rahmen der Personalisierung eine am Koppel-Element (4) angelegte Spannung verändert wird, welche von der Elektroden-Anordnung der Personalisierungsmaschine detektiert wird, wodurch Daten von der Mikroprozessoreinheit (2) des tragbaren Datenträgers (1) an die Personalisierungsmaschine übertragen werden.

5. Verfahren nach Anspruch 4, **dadurch gekennzeichnet, dass** die an die Personalisierungsmaschine übertragenen Daten ein Bestätigungssignal zur Bestätigung des Empfangs von zuvor von der Personalisierungsmaschine an die Mikroprozessoreinheit (2) übermittelten Personalisierungsdaten umfassen.

6. Verfahren nach einem der vorhergehenden Ansprüche, **dadurch gekennzeichnet, dass** das elektrostatische Feld (E) über eine Elektroden-Anordnung bereitgestellt wird, welche zumindest eine erste Elektrode (8, 801) und zumindest eine Masse-Elektrode (8') umfasst, wobei die zumindest eine erste Elektrode (8, 801) in einen Sendebetrieb geschaltet werden kann, in dem zur Übermittlung der Personalisierungsdaten von der Personalisierungsmaschine an die Mikroprozessoreinheit (2) ein entsprechendes Potential zur Generierung des elektrostatischen Feldes an die zumindest eine erste Elektrode (8, 801) angelegt wird, und wobei die zumindest eine Masse-Elektrode (8') eine auf einem Bezugspotential liegende Elektrode ist, wobei der in das elektrostatische Feld (E) eingebrachte Datenträger (1) benachbart zu der zumindest einen ersten Elektrode (8, 801) und der zumindest einen Masse-Elektrode (8') angeordnet wird.

7. Verfahren nach Anspruch 6, **dadurch gekennzeichnet, dass** der in das elektrostatische Feld (E) eingebrachte Datenträger (1) zwischen der zumindest einen ersten Elektrode (8, 801) und der zumindest einen Masse-Elektrode (8') angeordnet ist und/oder dass nur eine Seite des in das elektrostatische Feld (E) eingebrachten Datenträgers (1) auf die zumindest einen erste Elektrode (8, 801) und die zumindest eine Masse-Elektrode (8') zuweist.

8. Verfahren nach Anspruch 6 oder 7 in Kombination mit Anspruch 5 oder 6, **dadurch gekennzeichnet, dass** die zumindest eine erste Elektrode (8, 801) ferner in einen Empfangsbetrieb geschaltet werden kann, in dem über die zumindest eine erste Elektrode (801) eine Veränderung einer am Koppel-Element (4) angelegten Spannung detektiert wird, wodurch Daten von der Mikroprozessoreinheit (2) des tragbaren Datenträgers (1) an die Personalisierungsmaschine übertragen werden.

9. Verfahren nach Anspruch 8 oder nach Anspruch 6 oder 7 in Kombination mit Anspruch 4 oder 5, **dadurch gekennzeichnet, dass** die Elektroden-Anordnung ferner zumindest eine zweite Elektrode (802) umfassen, welche in einem Empfangsbetrieb geschaltet werden kann, in dem über die zumindest eine zweite Elektrode (802) eine Veränderung einer am Koppel-Element (4) angelegten Spannung detektiert wird, wodurch Daten von der Mikroprozessoreinheit (2) des tragbaren Datenträgers (1) an die Personalisierungsmaschine übertragen werden.

10. Verfahren nach Anspruch 9, **dadurch gekennzeichnet, dass** die zumindest eine erste Elektrode (8, 801) und die zumindest eine zweite Elektrode (802) ein Paar von koaxial angeordneten Elektroden mit einer inneren und einer äußeren Elektrode umfassen, wobei die äußere Elektrode vorzugsweise eine erste Elektrode (801) und die innere Elektrode (802) vorzugsweise eine zweite Elektrode ist.

11. Verfahren nach Anspruch 10, bei dem zwei Paare von koaxial angeordneten Elektroden vorgesehen sind, welche gegenüberliegend zueinander angeordnet sind, wobei beim Betrieb der ersten und/oder zweiten Elektrode (801, 802) des einen Paars im Sende- und/oder Empfangsbetrieb die erste und/oder zweite Elektrode (801, 802) des anderen Paars auf Bezugspotential gesetzt werden und hierdurch die zumindest eine Masse-Elektrode (8') darstellen.

12. Verfahren nach einem der vorhergehenden Ansprüche, **dadurch gekennzeichnet, dass** die zumindest eine Masse-Elektrode (8') eine oder mehrere leitfähige Masseflächen (801') umfasst, wobei Masseflächen (801') vorzugsweise auf beiden Seiten des in das elektrostatische Feld (E) eingebrachten Datenträgers (1) angeordnet sind.

13. Personalisierungsmaschine zur Personalisierung eines tragbaren Datenträgers (1), insbesondere einer Chipkarte, mit einem Verfahren nach einem der vorhergehenden Ansprüche, wobei der tragbare Datenträger (1) eine Mikroprozessoreinheit (2) und ein Koppel-Element (4) mit zwei kapazitiv gekoppelten leitfähigen Flächen (401, 402) umfasst, wobei das Koppel-Element (4) mit zumindest einem Anschluss (3, 3') der Mikroprozessoreinheit (2) verschaltet ist,
**dadurch gekennzeichnet, dass**
die Personalisierungsmaschine eine Elektroden-Anordnung mit kapazitiv gekoppelten Elektroden (8, 8', 801, 802) zum Bereitstellen eines elektrostatischen Feldes (E) umfasst, in welches der tragbare Datenträger (1) zumindest mit seinem Koppel-Element (4) zur Personalisierung eingebracht werden kann, wobei das elektrostatische Feld (E) das Koppel-Element derart beeinflusst, dass ein Pegel an dem zumindest einen Anschluss (3, 3') verändert wird und hierdurch Personalisierungsdaten von der Personalisierungsmaschine an die Mikroprozessoreinheit (2) des tragbaren Datenträgers (1) übermittelt werden, und dass das Koppel-Element (4) ein von einem Benutzer betätigbarer Taster ist, wobei bei Betätigung des Tasters die leitfähigen Flächen (401, 402) elektrisch kontaktiert werden und hierdurch der Pegel an dem zumindest einen Anschluss (3, 3') beeinflusst wird.

14. Tragbarer Datenträger, insbesondere Chipkarte, welche mit einem Verfahren nach einem der Ansprüche 1 bis 13 personalisierbar ist, umfassend eine Mikroprozessoreinheit (2) und ein Koppel-Element (4) mit zwei kapazitiv gekoppelten leitfähigen Flächen (401, 402), wobei das Koppel-Element (4) mit zumindest einem Anschluss (3,3') der Mikroprozessoreinheit (2) verschaltet ist,
**dadurch gekennzeichnet, dass**
die Mikroprozessoreinheit (2) derart ausgestaltet ist, dass sie aus einer Veränderung eines Pegels an dem zumindest einen Anschluss, welche durch ein elektrostatisches Feld (E) hervorgerufen wird, das durch eine Personalisierungsmaschine über eine Elektroden-Anordnung mit kapazitiv gekoppelte Elektroden (8, 8', 801, 802) bereitgestellt wird und in welches das Koppel-Element (4) des tragbaren Datenträgers (1) eingebracht ist, von der Personalisierungsmaschine übermittelte Personalisierungsdaten ermitteln und speichern kann, und dass das Koppel-Element (4) ein von einem Benutzer betätigbarer Taster ist, wobei bei Betätigung des Tasters die leitfähigen Flächen (401, 402) elektrisch kontaktiert werden und hierdurch der Pegel an dem zumindest einen Anschluss (3, 3') beeinflusst wird.

## Claims

1. A method for personalizing a portable data carrier (1), in particular a chip card, having a microprocessor unit (2) and a coupling element (4) comprising two capacitively coupled conductive areas (401, 402), wherein the coupling element (4) is connected to at least one connector (3, 3') of the microprocessor unit (2),
**characterized in that**
by a personalization machine an electrostatic field (E) is made available via an electrode arrangement having capacitively coupled electrodes (8, 8', 801, 802) and the portable data carrier (1) is placed in the electrostatic field (E) at least with its coupling element (4), wherein the electrostatic field (E) so influences the coupling element (4) that a level at the at least one connector (3, 3') is changed, and thereby personalization data are transmitted from the personalization machine to the microprocessor unit (2) of the portable data carrier (1), and that the coupling element (4) is a sensing device operable by a user, wherein, upon operating the sensing device, the conductive areas (401, 402) are electrically contacted, and the level at the at least one connector (3, 3') is influenced thereby.

2. The method according to claim 1, **characterized in that** a portable data carrier (1) in the form of an OTP chip card is personalized, wherein the OTP chip card is so configured that by operating the sensing device (4) the output of a password on a display of the OTP chip card is triggered.

3. The method according to any of the preceding claims, **characterized in that** in the portable data carrier (1) a voltage supply (5) is provided that is connected to the coupling element (4), wherein a level made available by the voltage supply (5) at the at least one connector (3, 3') is changed by the electrostatic field (E) by influencing the coupling element (4).

4. The method according to any of the preceding claims, **characterized in that** within the framework of the personalization a voltage applied to the coupling element (4) is changed by the microprocessor unit (2) of the portable data carrier (1), the voltage being detected by the electrode arrangement of the personalization machine, whereby data are transferred from the microprocessor unit (2) of the portable data carrier (1) to the personalization machine.

5. The method according to claim 4, **characterized in that** the data transferred to the personalization machine comprise a confirmation signal to confirm the receipt of personalization data transmitted before from the personalization machine to the microprocessor unit (2).

6. The method according to any of the preceding claims, **characterized in that** the electrostatic field (E) is made available via an electrode arrangement comprising at least one first electrode (8, 801) and at least one ground electrode (8'), wherein the at least one first electrode (8, 801) can be switched to a send mode, wherein, for the transmission of the personalization data from the personalization machine to the microprocessor unit (2), a corresponding potential for generating the electrostatic field is applied to the at least one first electrode (8, 801), and wherein the at least one ground electrode (8') is an electrode connected to a reference potential, wherein the data carrier (1) placed in the electrostatic field (E) is arranged adjacent to the at least one first electrode (8, 801) and the at least one ground electrode (8').

7. The method according to claim 6, **characterized in that** the data carrier (1) placed in the electrostatic field (E) is arranged between the at least one first electrode (8, 801) and the at least one ground electrode (8') and/or that only one side of the data carrier (1) placed in the electrostatic field (E) points towards the at least one first electrode (8, 801) and the at least one ground electrode (8').

8. The method according to claim 6 or 7 in combination with claim 5 or 6, **characterized in that** the at least one first electrode (8, 801) can further be switched to a receive mode in which a change of a voltage applied to the coupling element (4) is detected via the at least one first electrode (801), whereby data are transferred from the microprocessor unit (2) of the portable data carrier (1) to the personalization machine.

9. The method according to claim 8 or according to claim 6 or 7 in combination with claim 4 or 5, **characterized in that** the electrode arrangement further comprises at least one second electrode (802) that can be switched to a receive mode in which a change of a voltage applied to the coupling element (4) is detected via the at least one second electrode (802), whereby data are transferred from the microprocessor unit (2) of the portable data carrier (1) to the personalization machine.

10. The method according to claim 9, **characterized in that** the at least one first electrode (8, 801) and the at least one second electrode (802) comprise a pair of coaxially arranged electrodes having an inner and an outer electrode, wherein the outer electrode is preferably a first electrode (801) and the inner electrode (802) is preferably a second electrode.

11. The method according to claim 10, wherein two pairs of coaxially arranged electrodes are provided that are arranged in mutually opposing fashion, wherein, upon operation of the first and/or second electrode (801, 802) of the one pair in the send and/or receive mode, the first and/or second electrode (801, 802) of the second pair are set to reference potential and thereby represent the at least one ground electrode (8').

12. The method according to any of the preceding claims, **characterized in that** the at least one ground electrode (8') comprises one or several conductive ground areas (801'), wherein ground areas (801') are preferably arranged on both sides of the data carrier (1) placed in the electrostatic field (E).

13. A personalization machine for personalizing a portable data carrier (1), in particular a chip card, with a method according to any of the preceding claims, wherein the portable data carrier (1) comprises a microprocessor unit (2) and a coupling element (4) having two capacitively coupled conductive areas (401, 402), wherein the coupling element (4) is connected to at least one connector (3, 3') of the microprocessor unit (2),
**characterized in that**
the personalization machine comprises an electrode arrangement having capacitively coupled electrodes (8, 8', 801, 802) for making available an electrostatic field (E), in which the portable data carrier (1) can be placed at least with its coupling element (4) for the purpose of personalization, wherein the electrostatic field (E) so influences the coupling element that a level at the at least one connector (3,3') is changed, and thereby personalization data are transmitted from the personalization machine to the microprocessor unit (2) of the portable data carrier (1), and that the coupling element (4) is a sensing device operable by a user, wherein, upon operation of the sensing device, the conductive areas (401, 402) are electrically contacted, and the level at the at least one connector (3,3') is influenced thereby.

14. A portable data carrier, in particular a chip card, which can be personalized with a method according to any of the claims 1 to 13, comprising a microprocessor unit (2) and a coupling element (4) having two capacitively coupled conductive areas (401, 402), wherein the coupling element (4) is connected to at least one connector (3, 3') of the microprocessor unit (2),
**characterized in that**
the microprocessor unit (2) is so configured that, from a change of a level at the at least one connector caused by an electrostatic field (E) which is made available by a personalization machine via an electrode arrangement having capacitively coupled electrodes (8, 8', 801, 802) and in which the coupling element (4) of the portable data carrier (1) is placed, said microprocessor unit can ascertain and store personalization data transmitted by the personalization machine, and that the coupling element (4) is a sensing device operable by a user, wherein, upon operation of the sensing device, the conductive areas (401, 402) are electrically contacted, and the level at the at least one connector (3, 3') is influenced thereby.

## Revendications

1. Procédé de personnalisation d'un support de données (1) portable , notamment d'une carte à puce, ayant une unité de microprocesseur (2) et un élément de couplage (4) comprenant deux surfaces conductrices (401, 402) à couplage capacitif, l'élément de couplage (4) étant connecté à au moins une borne (3,3') de l'unité de microprocesseur (2),
**caractérisé en ce que**
par une machine de personnalisation, un champ électrostatique (E) est mis à disposition par l'intermédiaire d'un agencement d'électrodes à électrodes (8, 8', 801, 802) à couplage capacitif, et **en ce que** le support de données portable (1) est introduit au moins avec son élément de couplage (4) dans le champ électrostatique (E), le champ électrostatique (E) influençant de telle manière l'élément de couplage (4) qu'un niveau à la au moins une borne (3,3') est modifié, ce par quoi des données de personnalisation sont transférées de la machine de personnalisation à l'unité de microprocesseur (2) du support de données (1) portable, et **en ce que** l'élément de couplage (4) est un palpeur actionnable par un utilisateur, les surfaces conductrices (401, 402) étant, lors de l'actionnement du palpeur, contactées électriquement, ce par quoi le niveau à la au moins une borne (3, 3') est influencé.

2. Procédé selon la revendication 1, **caractérisé en ce qu'**un support de données (1) portable ayant la forme d'une carte à puce OTP est personnalisé, la carte à puce OTP étant réalisée de telle manière que, par actionnement du palpeur (4), la délivrance d'un mot de passe sur une unité d'affichage de la carte à puce OTP est engendrée.

3. Procédé selon une des revendications précédentes, **caractérisé en ce que**, dans le support de données (1) portable, une alimentation en courant (5) connectée à l'élément de couplage (4) est prévue, cependant que, du fait du champ électrostatique (E), par le biais de l'influence exercée sur l'élément de couplage (4), un niveau mis à disposition par l'alimentation en courant (5) à la au moins une borne (3, 3') est modifié.

4. Procédé selon une des revendications précédentes, **caractérisé en ce que**, par l'unité de microprocesseur (2) du support de données (1) portable , dans le cadre de la personnalisation, une tension appliquée à l'élément de couplage (4) est modifiée, laquelle est détectée par l'agencement d'électrodes de la machine de personnalisation, ce par quoi des données sont transmises de l'unité de microprocesseur (2) du support de données (1) portable à la machine de personnalisation.

5. Procédé selon la revendication 4, **caractérisé en ce que** les données transmises à la machine de personnalisation comprennent un signal de confirmation pour la confirmation de la réception de données de personnalisation auparavant transférées par la machine de personnalisation à l'unité de microprocesseur (2).

6. Procédé selon une des revendications précédentes, **caractérisé en ce que** le champ électrostatique (E) est mis à disposition par le biais d'un agencement d'électrodes qui comprend au moins une première électrode (8, 801) et au moins une électrode de masse (8'), la au moins une première électrode (8, 801) pouvant être commutée en un mode émission dans lequel, pour le transfert des données de personnalisation de la machine de personnalisation à l'unité de microprocesseur (2), un potentiel correspondant pour la génération du champ électrostatique est appliqué à la au moins une première électrode (8, 801), et la au moins une électrode de masse (8') étant une électrode se trouvant sur un potentiel de référence, le support de données (1) introduit dans le champ électrostatique (E) étant agencé de manière adjacente à la au moins une première électrode (8, 801) et à la au moins une électrode de masse (8').

7. Procédé selon la revendication 6, **caractérisé en ce que** le support de données (1) introduit dans le champ électrostatique (E) est agencé entre la au moins une première électrode (8, 801) et la au moins une électrode de masse (8') et/ou **en ce que** seulement un côté du support de données (1) introduit dans le champ électrostatique (E) est orienté vers la au moins une première électrode (8, 801) et la au moins une électrode de masse (8').

8. Procédé selon la revendication 6 ou 7 en combinaison avec la revendication 5 ou 6, **caractérisé en ce que** la au moins une première électrode (8, 801) peut en outre être commutée en un mode réception dans lequel, par le biais de la au moins une première électrode (801), une modification d'une tension appliquée à l'élément de couplage (4) est détectée, ce par quoi des données sont transmises de l'unité de microprocesseur (2) du support de données (1) portable à la machine de personnalisation.

9. Procédé selon la revendication 8 ou selon la revendication 6 ou 7 en combinaison avec la revendication 4 ou 5, **caractérisé en ce que** l'agencement d'électrodes comprend en outre au moins une deuxième électrode (802) qui peut être commutée en un mode réception dans lequel, par le biais de la au moins une deuxième électrode (802), une modification d'une tension appliquée à l'élément de couplage (4) est détectée, ce par quoi des données sont transmises de l'unité de microprocesseur (2) du support de données (1) portable à la machine de personnalisation.

10. Procédé selon la revendication 9, **caractérisé en ce que** la au moins une première électrode (8, 801) et la au moins une deuxième électrode (802) comprennent une paire d'électrodes agencées coaxialement et ayant une électrode interne et une électrode externe, l'électrode externe étant de préférence une première électrode (801) et l'électrode interne (802) étant de préférence une deuxième électrode.

11. Procédé selon la revendication 10, dans lequel des paires d'électrodes agencées coaxialement et se faisant face sont prévues, cependant que, lors du fonctionnement de la première et/ou de la deuxième électrode (801, 802) de l'une paire en mode émission et/ou réception, la première et/ou de la deuxième électrode (801, 802) de l'autre paire sont mises sur potentiel de référence et représentent par cela la au moins une électrode de masse (8').

12. Procédé selon une des revendications précédentes, **caractérisé en ce que** la au moins une électrode de masse (8') comprend une ou plusieurs surfaces de masse (801') conductrices, des surfaces de masse (801') étant de préférence agencées des deux côtés du support de données (1) introduit dans le champ électrostatique (E).

13. Machine de personnalisation destinée à la personnalisation d'un support de données (1) portable, notamment d'une carte à puce, suivant une procédé selon une des revendications précédentes, le support de données (1) portable comprenant une unité de microprocesseur (2) et un élément de couplage (4) ayant deux surfaces conductrices (401, 402) à couplage capacitif, l'élément de couplage (4) étant connecté à au moins une borne (3, 3') de l'unité de microprocesseur (2),
**caractérisé en ce que**
la machine de personnalisation comprend un agencement d'électrodes à électrodes (8, 8', 801, 802) à couplage capacitif pour la mise à disposition d'un champ électrostatique (E) dans lequel le support de données portable (1) peut, pour la personnalisation, être introduit au moins avec son élément de couplage (4), le champ électrostatique (E) influençant de telle manière l'élément de couplage qu'un niveau à la au moins une borne (3, 3') est modifié, ce par quoi des données de personnalisation sont transférées de la machine de personnalisation à l'unité de microprocesseur (2) du support de données (1) portable, et **en ce que** l'élément de couplage (4) est un palpeur actionnable par un utilisateur, les surfaces conductrices (401, 402) étant, lors de l'actionnement du palpeur, contactées électriquement, ce par quoi le niveau à la au moins une borne (3, 3') est influencé.

14. Support de données portable, notamment carte à puce, qui est personnalisable suivant une procédé selon une des revendications de 1 à 13, comprenant une unité de microprocesseur (2) et un élément de couplage (4) ayant deux surfaces conductrices (401, 402) à couplage capacitif, l'élément de couplage (4) étant connecté à au moins une borne (3, 3') de l'unité de microprocesseur (2),
**caractérisé en ce que**
l'unité de microprocesseur (2) est réalisée de telle manière que, à partir d'une modification d'un niveau à la au moins une borne produite par un champ électrostatique (E) qui est mis à disposition par une machine de personnalisation par le biais d'un agencement d'électrodes à électrodes (8, 8', 801, 802) à couplage capacitif et dans lequel l'élément de couplage (4) du support de données portable (1) est introduit, elle peut identifier et mémoriser des données de personnalisation transférées par la machine de personnalisation, et **en ce que** l'élément de couplage (4) est un palpeur actionnable par un utilisateur, les surfaces conductrices (401, 402) étant, lors de l'actionnement du palpeur, contactées électriquement, ce par quoi le niveau à la au moins une borne (3, 3') est influencé.
